# EUROPEAN PATENT SPECIFICATION

(11) **EP 0 512 859 B1**
(45) Date of publication and mention of the grant of the patent: **26.11.1997**
(21) Application number: 92304170.1
(22) Date of filing: 08.05.1992
(51) Int. Cl.: G11B 7/00, G11B 20/22, G11B 20/10

(54) **Information reproducing apparatus for use with an optical card**
Gerät zur Wiedergabe von Informationen zur Verwendung mit einer optischen Karte
Appareil de reproduction d'informations pour l'utilisation avec une carte optique

(30) Priority: 10.05.1991 JP 133286/91
(43) Date of publication of application: 11.11.1992
(73) Proprietor: OLYMPUS OPTICAL CO., LTD, Tokyo (JP)
(72) Inventor: Horiguchi, Toshio, Hachioji City, Tokyo (JP)
(74) Representative: Fenlon, Christine Lesley

(56) References cited:
- EP-A- 0 301 537
- EP-A- 0 383 237
- PATENT ABSTRACTS OF JAPAN vol. 14, no. 529 (P-1133)22 November 1990 & JP-A-2 223 074
- PATENT ABSTRACTS OF JAPAN vol. 14, no. 4 (P-986)9 January 1990 & JP-A-1 256 069

## Description

The present invention relates to an information reproducing apparatus for use with an optical card, and, in particular, one in which the optical card is arranged to be moved in a reciprocal manner with respect to an optical head arranged in the apparatus.

Known optical cards, which are not rewritable, have a large memory storage capacity and are very convenient for individuals to carry. Therefore, such optical cards are widely applied as private health management cards, portable maps, bankbooks, or prepaid cards for shopping, etc.

Such optical cards have a plurality of data tracks which are pre-recorded in a longitudinal direction of the optical card. Optical information is recorded/reproduced by moving the optical card and the optical head relative to one another in the track direction and a direction perpendicular thereto. Optical information is modulated under a self-clock system modulation method, such as an MFM modulation method, to be recorded on the optical card. When reproducing optical information recorded on the optical card, synchronous clocks are extracted from read-out signals by a PLL method and information data is reproduced based on the thus-extracted synchronous clocks.

Japanese Patent Laid-open Preliminary Publication No. 2-282973 discloses an information recording/reproducing apparatus which is arranged such that the optical card is held in a shuttle and the shuttle is driven with the aid of a VCM (voice coil motor).

Japanese Patent Laid-open Preliminary Publication No. 63-25868 reflecting the preamble of claim 1, discloses another information recording/reproducing apparatus, in which variation in the speed of movement of such a shuttle, holding an optical card therein, is detected by using an encoder, and the read-out signals are corrected in accordance with the thus-detected variation in the speed of the shuttle.

Generally, in an optical information recording/reproducing apparatus employing an optical disc, variation in the rotation of the disc is very small because the optical disc per se has an inertia; in turn, the synchronous clocks are not much affected by variations in the rotation of the disc. However, in optical information recording/reproducing apparatus employing an optical card, since it is necessary to move the optical card linearly with respect to the optical head in a reciprocal manner, it is impossible to utilise inertia to remove the variation in the speed of the optical card, so that the variation in the speed of the optical card becomes large.

In the apparatus disclosed in Japanese Patent Preliminary Publication No. 2-282973, the voice coil motor is used to drive the shuttle, holding the optical card therein, in order to restrain variation in the speed of the optical card, since the voice coil motor can drive the shuttle without a driving mechanism such as a gear, and has an excellent control ability. In such a way, the speed variation can be limited considerably. Further, in the apparatus disclosed in Japanese Patent Preliminary Publication No. 63-25868, the read-out signals are corrected on the basis of a signal provided by the encoder, which is arranged on the shuttle, in order to compensate for the variation in speed of the optical card.

However, when driving the optical card with respect to the optical head in a reciprocal manner, the optical card must be stopped at both end portions of its moving area. Further, the distance from both the end portions to the information recording/reproducing area, within which the speed of the optical card should be increased to, or decreased from, its normal operating speed, is very short, e.g. about 5 mm. Therefore, in case of controlling the movement of the shuttle by using the voice coil motor, it is required that the voice coil motor has a large thrust. As a result, the cost of manufacturing the apparatus becomes expensive, the size of apparatus becomes large, and the weight becomes heavy.

On the other hand, in case of detecting the speed of the shuttle using an encoder, the cost of manufacturing becomes expensive too, because of the price of the encoder. Further, when correcting the read out signal on the basis of the signal detected by the encoder, an encoder having fine pitches is required, because it is necessary to detect the speed of the shuttle with a high accuracy. Therefore, the cost becomes high. If an encoder having rough pitches is used, such encoder could not follow any sudden change of the speed of the shuttle, so that information data could not be read out correctly.

Accordingly, it is desirable to provide at relatively low cost an optical information reproducing apparatus, for use with an optical card, by which optical information can be reproduced correctly even if the speed of the optical card relative to the optical head varies.

According to the present invention there is provided information reproducing apparatus, for use with an optical card, comprising: an optical head for reading, during a read operation, information stored on the optical card and providing an information signal which is indicative of said information; transfer means for moving the optical card, relative to the optical head, during such a read operation; speed detecting means for detecting, during said read operation, the speed with which the optical card is moving with respect to the optical head, and providing a detection signal which is indicative of said speed; and correction means, connected to receive said information signal and said detection signal, for employing the said detection signal to correct said information signal in such a way as to compensate for the effect thereon of variations in the speed of movement of the optical card; characterised in that said speed detecting means are connected to receive the uncorrected information signal and are operable to derive the speed of movement of said optical card therefrom.

Thus, in apparatus embodying the present invention, a signal indicative of the speed of movement of the optical card is derived from the information signal, which varies in dependence upon the variation in the speed of the optical card, and the information signal read out from the optical card is corrected using the moving speed signal of the optical card. Accordingly, even when the speed of movement of the optical card varies greatly, information data can be read out from the optical card in a correct manner.

Reference will now be made, by way of example, to the accompanying drawings, in which:
Fig. 1 shows a schematic view of an optical card which can be used in apparatus embodying the present invention;
Fig. 2 shows an enlarged schematic view of part of the optical card shown in Fig. 1;
Fig. 3 is a block diagram of apparatus embodying the present invention;
Fig. 4 shows a schematic view of an optical system forming part of apparatus embodying the present invention;
Figs. 5 and 6 show schematic views for use in explaining how information data recorded on an optical card is read out using apparatus embodying the present invention;
Figs. 7A and 7B show respective waveforms of output signals produced by apparatus embodying the present invention;
Fig. 8 is a block diagram illustrating a portion of apparatus embodying the present invention;
Fig. 9 is a block diagram illustrating a modification of the portion shown in Fig. 8; and
Fig. 10 shows a schematic view for use in explaining the operation of further apparatus embodying the present invention.

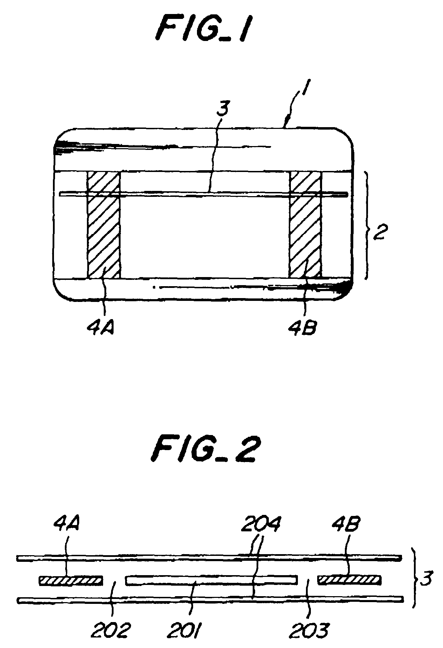

As shown in Fig. 1, an optical card 1 which can be used in apparatus embodying the present invention is provided with an optical recording area 2 in which a plurality of data tracks 3 are formed. At both end portions of the recording area 2, there are provided ID portions 4A and 4B on which track information corresponding to each track is pre-recorded. Between these ID portions 4A and 4B is arranged a data portion 5 which is pre-recorded when manufacturing the optical card 1.

Fig. 2 shows an enlarged schematic view of a construction of one of the tracks formed on the optical card 1. It should be noted that only one sector is formed in one track in this embodiment. In Fig. 2, the numerical reference 201 represents sector data recorded in the data track 3, 202 a gap formed between the ID portion 4A and the sector data 201, 203 a gap formed between the ID portion 4B and the sector data 201, and 204 guide tracks by which tracking servo control is performed. The gaps 202 and 203 are provided to allow the speed with which the optical card 1 is moving to increase to its (constant) operational value from zero, or decrease from its operational value to zero, as appropriate.

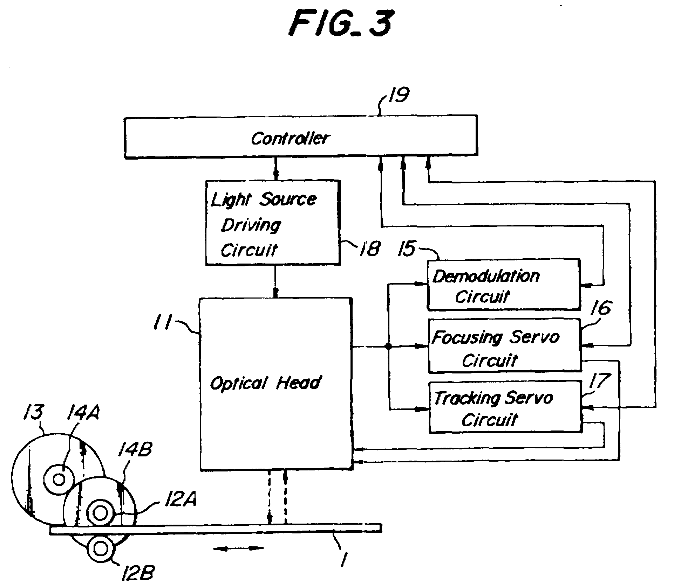

As shown in Fig. 3, apparatus embodying the present invention, in which information data is recorded/reproduced on/from the optical card 1 having such a construction as is shown in Figs. 1 and 2, has an optical head 11. Optical information is recorded/reproduced by relatively moving the optical card 1 and an optical head 11. The optical card 1 is moved in a track direction, along which the tracks 3 extend, and the optical head 11 is moved in a direction which is perpendicular to the track direction. The optical card 1 is directly driven with the aid of rubber rollers 12A and 12B; and a driving source therefor is a motor 13. The rotating speed of the motor 13 is decelerated by gears 14A and 14B; then the rubber roller 12A, whose shaft is commonly used in the gear 14B, directly drives the optical card 1. The rubber roller 12B serves as a following roller. In such a driving system for driving the optical card, since the weight of the object to be driven, i.e. optical card, is very light, a cheap driving motor, such as DC motor, can be used.

The optical head 11 comprises a light source, an optical system including an objective lens, and a photo detector (none of which are shown in Fig. 3). A light beam emitted from the light source is made incident upon the optical card 1 as a light beam spot via the optical system, and the reflected light beam reflected by the optical card 1 is detected by the photo detector to be converted into electric signals, such as an information reproducing signal, focus error signal and track error signal. The information reproducing signal is sent to a demodulating circuit 15, and the focus error signal and the track error signal are supplied to a focusing servo circuit 16 and a tracking servo circuit 17, respectively. In the focusing servo circuit 16, a signal is produced for driving and controlling a focusing actuator (not shown), by which the light beam spot is controlled so as to be constantly formed on the optical card 1 in a focused condition. The tracking servo circuit 17 generates a signal for driving a tracking actuator (not shown) in accordance with the tracking error signal, by which the light beam spot is controlled so as to follow the track 3 formed on the optical card 1. Further, a light source driving circuit 18 serves to control a level of the light beam emitted from the light source in accordance with a command supplied from a controller 19, so either a light beam having a high power for writing information or a light beam having a low power for reproducing information is illuminated on the optical card 1 as occasion demands.

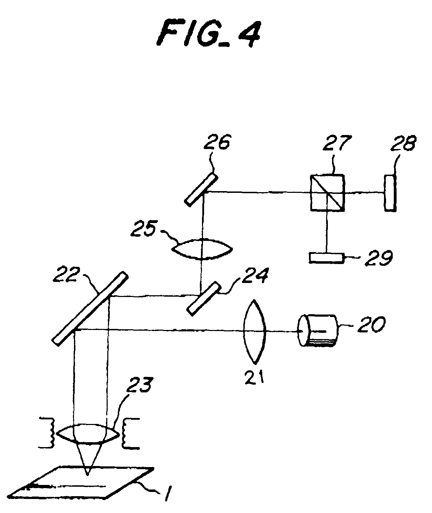

The construction of the optical system arranged in the optical head 11 will now be explained with reference to Fig. 4. By the optical system, a large area of the optical card 1 is illuminated by the light beam to read out information data recorded on the optical card 1. The light beam, which is emitted from an LED 20, is made incident upon a mirror 22 via a collimator lens 21 and reflected thereby toward an objective lens 23. The light beam is condensed by the objective lens 23 and then made incident upon the optical card 1. The reflected light beam reflected by the optical card 1 is condensed by the objective lens 23 again, reflected by the mirror 22 and a further mirror 24, and further by a mirror 26 via an image lens 25. The reflected light beam is then made incident upon a beam splitter 27 at which the reflected light beam is divided into two light beams, one of which is made incident upon a photo detector 28 for detecting a tracking error signal and information data signal, and the other one upon a photo detector 29 for detecting a focusing error signal.

In the optical system illustrated in Fig. 4, since the focus servo control is performed by an off-axial method, the photo detector 29 comprises two light receiving elements and the difference between the outputs of these light receiving elements is detected in order to obtain the focusing error signal.

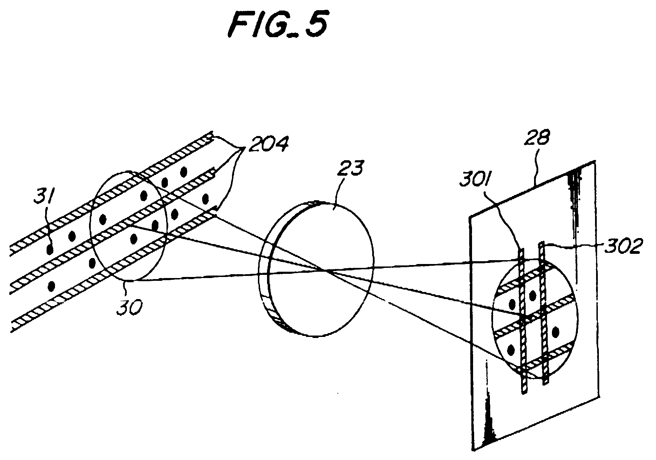

A principle for reading out information data recorded on the optical card 1 will now be explained with reference to Fig. 5. As shown in Fig. 5, on the photo detector 28 there are provided line sensors 301 and 302; images of the guide tracks 204 are formed on the photo detector 28 so as to be perpendicular to the line sensors 301 and 302. In this system, the tracking error signal is obtained by detecting positions of the guide tracks 204 on the line sensors 301 and 302. Further, on the line sensors 301 and 302, images of recording pits 31 formed on the optical card 1 are also formed . Therefore, by detecting an output of some portion of the line sensors 301 and 302, which corresponds to the image of the recording pit 31, an information data signal can be obtained. It may be possible to use not only line sensors, in which signals detected in each light receiving element can be obtained independently, but also line sensors having a CCD, in which signals detected in each light receiving element are transferred to the demodulating circuit at the same time.

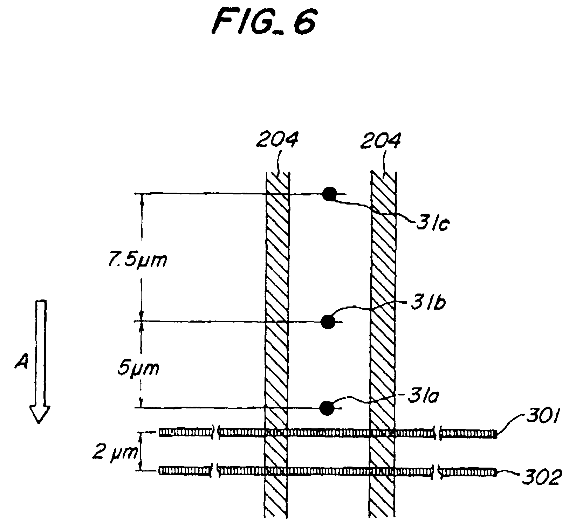

How to detect the speed of movement of the optical card 1 from the reading signals obtained by the line sensors 301 and 302 and then reproduce information recorded on the optical card 1 will now be explained with reference to Figs. 6, 7 and 8. In this embodiment, since the optical card 1 is arranged to be reciprocally transferred with the aid of rubber rollers, the speed of the optical card 1 has some variation. Therefore, it is necessary to detect the speed of the optical card 1 and to correct the read-out signal on the basis of the thus-detected speed. In Fig. 5, a plurality of tracks are illuminated by the light beam in order to reproduce information recorded on those tracks simultaneously, but in Fig. 6, attention is paid to reproducing information recorded on only one track.

In Fig. 6, there are indicated two guide tracks 204, images of recording pits 31a, 31b, 31c and first and second line sensors 301 and 302. The line sensors 301 and 302 are arranged on the photodetector 28 at a distance apart of 2 µm, which is scaled on the optical card 1. In the case that the optical system is so designed as to form the image of the recording pits and the guide tracks with a magnification of 10∼20 times, the distance between the first and second line sensors 301 and 302 becomes 20∼40 µm on the photo detector 28. Assuming that the recording pits are modulated by MFM modulation method with a minimum pit distance of 5 µm, there exist three kinds of pit distances on the optical card 1, namely 5 µm (1τ), 7.5 µm (1.5τ) and 10 µm (2τ). In Fig. 6, it is arranged such that the distance between the recording pits 31a and 31b is 5 µm (1τ) and the distance between the recording pit 31b and 31c is 7.5 µm (1.5τ). The optical card 1 is moved in a direction shown by an arrow A.

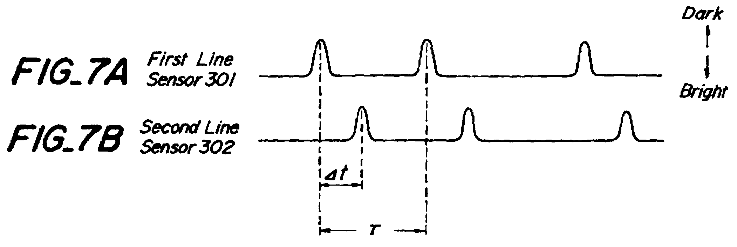

First, the recording pit 31a traverses the line sensor 301 in accordance with the movement of the optical card 1, in response to which an output signal, i.e. read-out signal, of the first line sensor 301 becomes dark. After the recording pit 31a has passed over the line sensor 301, the read-out signal from the first line sensor 301 becomes bright. Next, the optical card proceeds in the direction A and the recording pit 31a traverses the line sensor 302, in response to which the read-out signal from the second line sensor 302 becomes dark in the same manner. At this time, the next recording pit 31b has not not yet reached the first line sensor 301, so the read-out signal from the first line sensor 301 is still bright. Fig. 7A is a waveform showing the read-out signal obtained from the first line sensor 301 when the recording pits 31a, 31b and 31c traverse the first line sensor in this order; and Fig. 7B is a waveform of the corresponding outputs of the second line sensor 302.

In Figs. 7A and 7B, the horizontal axes represent time and the vertical axes show signal levels of the outputs of the line sensors, the signal level being represented in such a manner that an upper side is dark and a lower side is bright. The pulses of these waveforms correspond to the recording pits 31a, 31b, 31c, respectively, in order starting from the left side. The reference Δt represents a transit time taken for one recording pit to pass over the first and second line sensors 301 and 302, and the reference τ represents a pit distance on the first line sensor 301. It should be noted that the unit of the pit distance (reference τ) is time.

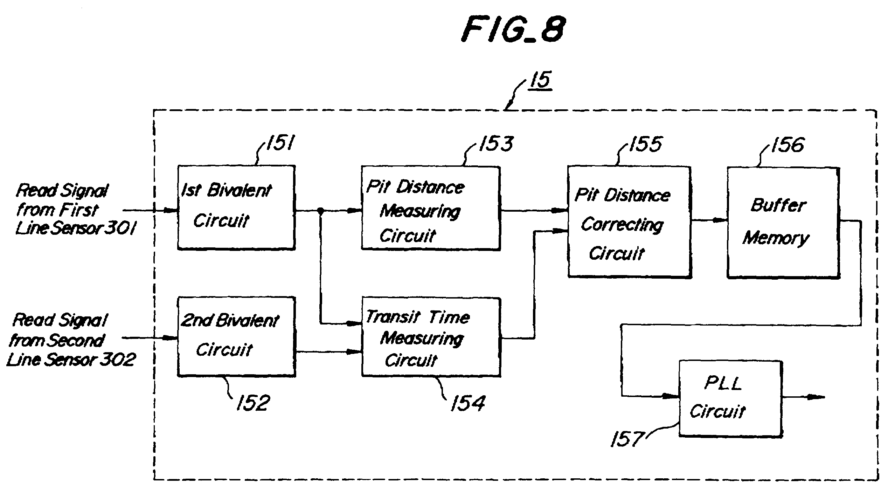

Fig. 8 is a block diagram of an example of the construction of the demodulation circuit 15. In the demodulation circuit 15, a variation of the speed of movement of the optical card 1 is corrected in accordance with read-out signals obtained from the first and second line sensors 301 and 302. In particular, the read-out signals obtained from the first and second line sensors 301 and 302 are converted into bivalent signals in first and second bivalent circuits 151 and 152, respectively. The output of the first bivalent circuit 151 is supplied to a pit distance measuring circuit 153, where the pit distance τ between one recording pit and the next recording pit is measured. The output of the first bivalent circuit 151 is also supplied, together with the output of the second bivalent circuit 152, to a transit time measuring circuit 154 . In the circuit 154, a transit time Δt taken for that one reading pit to pass over the first and second line sensors 301 and 302 is measured. In the pit distance measuring circuit 153 and the transit time measuring circuit 154, there are provided counters, respectively, and these counters start to count clock pulses of a given period at a leading edge (or a trailing edge) of the first pulse and stop counting at a leading edge (or a trailing edge) of the second pulse, in order to measure the pit distance τ and the transit time Δt in units of time.

Both of the outputs of the pit distance measuring circuit 153 and the transit time measuring circuit 154 are supplied to a pit distance correcting circuit 155, at which the pit distance τ is corrected with the aid of the value of Δt, in accordance with the following formula:$\text{T = τ X t/Δt}$ where T represents a corrected pit distance (time) and t represents a constant transit time taken for that one recording pit to pass over the first and second line sensors 301 and 302 when the optical card 1 is transferred without any variation in its speed.

For instance, when the speed of the optical card 1 is a constant 160 mm/sec, the value t becomes 12.5 µsec. (2 µm/160 mm/sec. = 12.5 µsec.). When travelling at this constant speed, with no variation, the correct pit distance, in units of time, between the pits 31a and 31b is 31.25µs. However, when moving at variable speed the pit distance τ may be measured by the pit distance measuring circuit 153 as 28 µsec, and the transit time Δτ measured by the transit time measuring circuit 154 as 11 µsec, in which case the corrected pit distance becomes as follows:-$\text{T = 28 × 12.5/11 = 31.81 µsec.}$

Therefore, it is proved that the pit distance τ measured in the circuit 153 is near the pit distance of lτ, because the lτ corresponds to 31.25 µsec when the optical card 1 is transferred with no variation of its moving speed. It is apparent that when a different value of the pit distance is detected and the variation of the moving speed is different from the above value, the correction of the pit distance can be performed.

Since the output of the pit distance correcting circuit 155 is represented by digital data showing the pit distance of the reading signals whose pit distance has been corrected, the output should be stored in a buffer memory 156 once and then a pulse signal should be produced by reading out information from the buffer memory 156. The pulse signal is then supplied to a PLL circuit 157 in order to remove a jitter component, which is generated when the read-out signal is converted into the bivalent signals in the bivalent circuits 151 and 152 or generated by the correction error of the transferring speed of the optical card, and then a data demodulated signal is obtained. It should be noted that either an analog-system PLL circuit comprising a phase comparator, charge pump and VFO or a digital-type PLL circuit, in which the corrected pit distance data is processed in a digital manner, may be used.

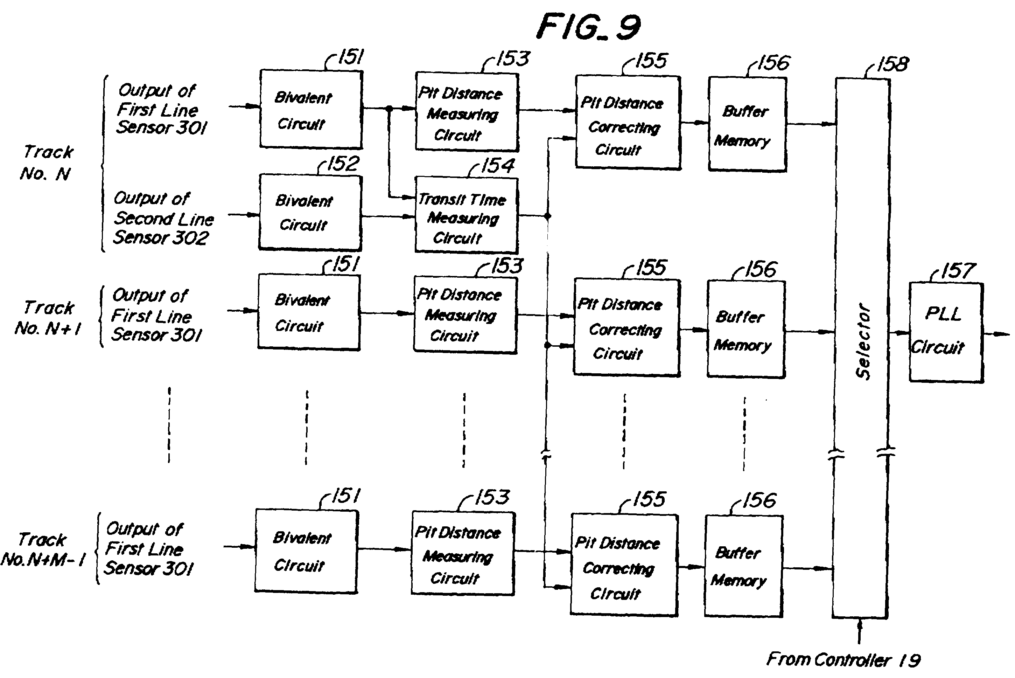

In the embodiment mentioned in the above, attention is paid to information data recorded on only one track of the optical card which is read out, but it may be possible to arrange it such that the demodulating circuit 15 detects the images of recording pits formed on a plurality of tracks. In this case, information data recorded on a plurality of tracks of the optical card can be read out at the same time. Fig. 9 is a block diagram showing the construction of such a demodulating circuit 15. It should be noted that the same numerical references are given to the same elements as are shown in Fig. 8.

As shown in Fig. 9, this demodulating circuit has a pit distance measuring circuit 153, pit distance correcting circuit 155 and buffer memory 156 for each track, but the output of just one transit time measuring circuit 154, arranged so as to receive input from the bivalent circuits 151 and 152 for track No. N, is commonly used by all pit distance correcting circuits 155.

When information data recorded on the tracks from No. N to No. N+M-1 is read out at the same time, the pit distances measured by the pit distance measuring circuits 153 for the tracks from No. N to No. N+M-1 are corrected in the pit distance correcting circuits 155, respectively, with the aid of the transit time measuring circuit 154, and the corrected pit distances are stored in the buffer memories 156 arranged in each demodulating system for each track. One of the memory signals stored in the buffer memories 156 is selected in a selector 158 in accordance with a selection signal supplied from a controller 19, and the selected memory signal is supplied to the PLL circuit 157, by which a demodulated data signal is obtained. In this embodiment, there is arranged only one transit time measuring circuit 154 and the pit distance of each track is corrected with the aid of the output of this measuring circuit 154, but it may be possible to arrange a transit time measuring circuit for each track such that the pit distance is corrected with the aid of the output of the corresponding transit time measuring circuit, independently.

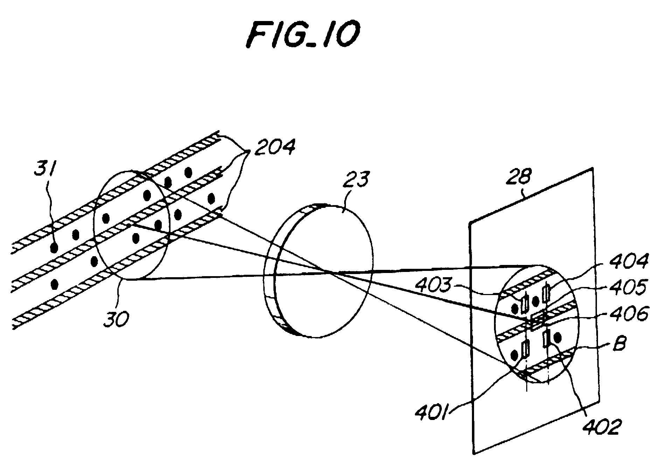

The construction of further apparatus embodying the present invention will now be described with reference to Fig. 10. It should be noted that the same numerical references as were used in Fig. 5 are used for the same elements in Fig. 10. In a circle B, images of guide tracks 204 and data (recording ) pits 31 formed on the photo detector 28 via the lens system 23 are illustrated. The hatched portions represent the images of the guide tracks 204 and black circular shaped portions correspond to images of data pits 31. On the photo detector 28 are provided six light receiving elements 401 to 406. The elements 401 to 404 are for detecting the images of the data pits 31 and the elements 405 and 406 are for detecting a tracking error signal. The light receiving elements 401 and 403, and 402 and 404 are arranged on respective lines, each of which are perpendicular to the images of the guide tracks, so as to detect the existence of data pits and then produce an electric signal. The light receiving elements 401 and 403, as well as the elements 402 and 404, are arranged to be separated by 2 µm from each other when measured on the optical card 1. The light receiving elements 405 and 406 are arranged substantially in a center of the light receiving elements 401 to 404 so as to be separated from each other by a line extended in the parallel direction to the images of the guide tracks 204. The image of the guide track 204 is detected by the light receiving elements 405 and 406 to detect a tracking error signal. That is to say, a difference between the outputs of these light receiving elements 405 and 406 is detected as a tracking error signal, and a tracking servo system is effected on the basis of the thus-detected tracking error signal.

As stated in the above, in the second embodiment, the light receiving elements 401 to 406 are used instead of the line sensors 301 and 302 of the first embodiment. The read out signal can be corrected in the same manner as explained in the first embodiment.

In the above-mentioned embodiment, a light emitting diode LED is used as a light source but another element, such as a laser diode, may be used. Further, the optical card is described as being directly transferred with the aid of the rubber roller, but it may be possible to arrange it such that the optical card is contained in a shuttle and the shuttle is driven by the aid of a rotating motor and a belt or a wire.

As stated in the above in detail, in apparatus embodying the present invention, when the optical card moves at variable speed information data can be read out from the optical card in a reliable manner, even though the apparatus can be manufactured at comparatively low cost.

## Claims

1. Information reproducing apparatus, for use with an optical card (1), comprising: an optical head (11) for reading, during a read operation, information (31) stored on the optical card (1) and providing an information signal which is indicative of said information; transfer means (12A, 12B, 13, 14A, 14B) for moving the optical card (1), relative to the optical head (11), during such a read operation; speed detecting means (151, 152, 153, 154) for detecting, during said read operation, the speed with which the optical card (1) is moving with respect to the optical head (11), and providing a detection signal which is indicative of said speed; and correction means (155), connected to receive said information signal and said detection signal, for employing the said detection signal to correct said information signal in such a way as to compensate for the effect thereon of variations in the speed of movement of the optical card (1); characterised in that said speed detecting means (151, 152, 153, 154) are connected to receive the uncorrected information signal and are operable to derive the speed of movement of said optical card (1) therefrom.

2. Apparatus as claimed in claim 1, wherein said optical head (11) comprises a photo detector (28) on which images of data tracks (3), and data pits (31) formed on the data tracks (3), are formed, said photo detector (28) comprising at least first and second sensors (301, 302) for detecting said images of data pits (31); a pit distance (τ) between data pits (31) successively arranged on the optical card (1) and a transit time (Δt) taken for one of those data pits (31) to pass over the first and second sensors (301, 302), being detected in accordance with outputs of the first and second sensors (301, 302).

3. Apparatus as claimed in claim 2, wherein said speed detecting means (151-154) comprise a pit distance measuring circuit (153), to which a read signal representing a data pit (31) detected by the said first sensor (301) is supplied, for use in measuring the distance (τ) between adjacent pits; a transit time measuring circuit (154), to which said read signal detected by said first sensor (301) and a read signal detected by said second sensor (302) are supplied in order to measure a transit time (Δt) taken for a data pit (31) to pass over the first and second sensors (301, 302); the said correcting means (155) comprising a pit distance correcting circuit for correcting an error in the pit distance (τ) measured by said pit distance measuring circuit (153) in accordance with the transit time (Δτ) of the data pit (31) detected by the transit time measuring circuit (154).

4. Apparatus as claimed in claim 3, wherein said speed detecting means (151-154) further comprise a first bivalent circuit (151) for converting the read signal detected by the first sensor (301) into bivalent signals and a second bivalent circuit (152) for converting the read signal detected by the second sensor (302) into bivalent signals; and a buffer memory (156) for storing the output signal of said pit distance correcting circuit (155) and producing a pulse signal corresponding to an output of said pit distance correcting circuit (155); and a PLL circuit (157) for removing a jitter component included in said corrected read signal and obtaining a demodulated data signal.

5. Apparatus as claimed in claim 2, wherein:
the said speed detecting means (151-154) comprise a plurality of pit distance measuring circuits (153) for detecting respective pit distances between adjacent data pits (31) formed on a plurality of data tracks (3), each pit distance measuring circuit (153) receiving a read signal corresponding to the data pits (3) detected by the first sensor (301); and
a transit time measuring circuit (154), connected to receive one of the read signals corresponding to the data pits (31) on one track (3) detected by the first sensor (301) and each read signal corresponding to the data pits (31) of each of the tracks (3) detected by the said second sensor (302), for measuring a transit time (At) taken for a data pit to pass over the first and second sensors (301, 302) for each data track (3) ;
the said correcting means (155) comprising a plurality of pit distance correcting circuits for correcting an error in the pit distance (τ) measured by each pit distance measuring circuit (153) in accordance with the transit time (Δt) detected by the transit time measuring circuit (154).

6. Apparatus as claimed in claim 5, wherein said speed detecting means (151-154) further comprise:
a plurality of bivalent circuits (151) for converting the read signals detected by the first and second sensors (301, 302) into bivalent signals;
a plurality of buffer memories (156) for storing the outputs of said pit distance correcting circuits (155) and producing pulse signals corresponding to the outputs of said pit distance correcting circuits (155);
a selector (158) for selecting one of the pulse signals in accordance with a command supplied from control means (19) of the apparatus and outputting the thus selected pulse signal; and
a PLL circuit (157) for removing a jitter component included in said pulse signals selected in said selector (158) and obtaining a demodulated data signal.

7. Apparatus as claimed in claim 3, 4, 5 or 6, wherein:
the pit distance (τ) measured in each pit distance measuring circuit (153) is corrected in each pit distance correcting circuit (155) by calculating the following formula:-$\text{T = τ x t/Δt}$ where,
T represents a corrected pit distance
τ represents the measured pit distance
t represents a time taken for a data pit (31) to pass over the first and second sensors (301, 302) when the optical card (1) is transferred without variation in its speed, and
Δt represents the transit time, i.e. the measured time period, required for a data pit (31) to actually pass over the first and second sensors (301, 302).

8. Apparatus as claimed in any one of claims 2 to 7, wherein said first and second sensors (301, 302) comprise line sensors.

## Patentansprüche

1. Informationswiedergabe-Einrichtung zum Gebrauch mit einer optischen Karte (1), umfassend: einen optischen Kopf (11), der während eines Lesevorgangs Information (31) liest, die auf der optischen Karte (1) gespeichert ist und ein Informationssignal liefert, das die Information anzeigt; Transportvorrichtungen (12A, 12B, 13, 14A, 14B) zum Bewegen der optischen Karte (1) relativ zum optischen Kopf (11) während eines solchen Lesevorgangs; Geschwindigkeitserfassungsvorrichtungen (151, 152, 153, 154), um damit während des Lesevorgangs die Geschwindigkeit zu erfassen, mit der sich die optische Karte (1) bezüglich des optischen Kopfs (11) bewegt, und das Bereitstellen eines Erfassungssignals, das diese Geschwindigkeit anzeigt; und eine Korrekturvorrichtung (155), die so geschaltet ist, daß sie das Informationssignal und das Erfassungssignal empfängt und das Erfassungssignal dazu verwendet, das Informationssignal so zu korrigieren, daß die Wirkung von Änderungen der Bewegungsgeschwindigkeit der optischen Karte (1) ausgeglichen wird,
dadurch gekennzeichnet, daß die Geschwindigkeitserfassungsvorrichtungen (151, 152, 153, 154) so geschaltet sind, daß sie das unkorrigierte Informationssignal empfangen und daraus die Bewegungsgeschwindigkeit der optischen Karte (1) ableiten können.

2. Einrichtung nach Anspruch 1, wobei der optische Kopf (11) einen Photodetektor (28) enthält, auf dem Bilder der Datenspuren (3) entstehen und Bilder der Datenpits (31) auf den Datenspuren (3), und der Photodetektor (28) zumindest erste und zweite Sensoren (301, 302) zum Erfassen der Bilder der Datenpits (31) enthält, und ein Pitabstand (τ) zwischen den nacheinander auf der optischen Karte (1) angeordneten Datenpits (31) und eine Durchlaufzeit (Δt) erfaßt werden, die für das Vorbeilaufen eines dieser Datenpits (31) an den ersten und zweiten Sensoren (301, 302) erforderlich ist, und zwar abhängig von den Ausgangssignalen der ersten und zweiten Sensoren (301, 302).

3. Einrichtung nach Anspruch 2, wobei die Geschwindigkeitserfassungsvorrichtungen (151 - 154) umfassen:
eine Pitabstand-Meßschaltung (153), in die zum Messen des Abstands (τ) zwischen benachbarten Pits ein vom ersten Sensor (301) erfaßtes Lesesignal eingespeist wird, das ein Datenpit (31) darstellt;
eine Durchlaufzeit-Meßschaltung (154), in die das vom ersten Sensor (301) erfaßte Lesesignal und ein vom zweiten Sensor (302) erfaßtes Lesesignal eingespeist werden, um die Durchlaufzeit (Δt) für ein Datenpit (31) zu messen, das an den ersten und zweiten Sensoren (301, 302) vorbeiläuft, wobei die Korrekturvorrichtung (155) eine Pitabstand-Korrekturschaltung zum Korrigieren eines Fehlers im Pitabstand (τ) enthält, den die Pitabstand-Meßschaltung (153) abhängig von der Durchlaufzeit (Δt) des Datenpits (31) mißt, die die Durchlaufzeit-Meßschaltung (154) erfaßt.

4. Einrichtung nach Anspruch 3, wobei die Geschwindigkeitserfassungsvorrichtungen (151 - 154) zudem enthalten: eine erste zweiwertige Schaltung (151), um das Lesesignal, das der erste Sensor (301) erfaßt, in zweiwertige Signale umzusetzen, und eine zweite zweiwertige Schaltung (152), um das Lesesignal, das der zweite Sensor (302) erfaßt, in zweiwertige Signale umzusetzen; und einen Pufferspeicher (156) zum Speichern des Ausgangssignals der Pitabstand-Korrekturschaltung (155) und zum Erzeugen eines Pulssignals entsprechend einem Ausgangssignal der Pitabstand-Korrekturschaltung (155); und eine PLL-Schaltung (157) zum Entfernen eines im korrigierten Lesesignal enthaltenen Verzerrungsanteils und zum Erhalten eines demodulierten Datensignals.

5. Einrichtung nach Anspruch 2, worin die Geschwindigkeitserfassungsvorrichtungen (151 - 154) enthalten:
eine Anzahl Pitabstand-Meßschaltungen (153) zum Erfassen jeweiliger Pitabstände zwischen benachbarten Datenpits (31), die auf einer Anzahl Datenspuren (3) ausgebildet sind, wobei jede Pitabstand-Meßschaltung (153) ein Lesesignal entsprechend den Datenpits (3) empfängt, die der erste Sensor (301) erfaßt, und
eine Durchlaufzeit-Meßschaltung (154), die so geschaltet ist, daß sie eines der Lesesignale empfängt, die zu den Datenpits (31) auf einer Spur (3) gehören, die der erste Sensor (301) erfaßt, und jedes Lesesignal, das zu den Datenpits (31) auf jeder der Spuren (3) gehört, die der zweite Sensor (302) erfaßt, um eine Durchlaufzeit (Δt) zu messen, die für das Vorbeilaufen eines Datenpits an den ersten und zweiten Sensoren (301, 302) für jede Datenspur (3) erforderlich ist,
wobei die Korrekturvorrichtung (155) eine Anzahl Pitabstand-Korrekturschaltungen zum Korrigieren eines Fehlers im Pitabstand (τ) enthält, den jede Pitabstand-Meßschaltung (153) abhängig von der Durchlaufzeit (Δt) mißt, die die Durchlaufzeit-Meßschaltung (154) erfaßt.

6. Einrichtung nach Anspruch 5, wobei die Geschwindigkeitserfassungsvorrichtungen (151 - 154) zudem umfassen:
eine Anzahl zweiwertiger Schaltungen (151) zum Umsetzen der Lesesignale, die die ersten und zweiten Sensoren (301, 302) erfassen, in zweiwertige Signale;
eine Anzahl Pufferspeicher (156) zum Speichern der Ausgangssignale der Pitabstand-Korrekturschaltungen (155) und zum Erzeugen von Pulssignalen gemäß den Ausgangssignalen der Pitabstand-Korrekturschaltungen (155);
einen Wähler (158) zum Wählen eines der Pulssignale abhängig von einem Befehl, den die Steuervorrichtung (19) der Einrichtung übermittelt, und zum Ausgeben des so gewählten Pulssignals; und
eine PLL-Schaltung (157) zum Entfernen eines Verzerrungsanteils, der in den Pulssignalen enthalten ist, die im Wähler (158) gewählt werden, und zum Erhalten eines demodulierten Datensignals.

7. Einrichtung nach Anspruch 3, 4, 5 oder 6, wobei:
der Pitabstand (τ), der in jeder Pitabstand-Meßschaltung (153) gemessen wird, in jeder Pitabstand-Korrekturschaltung (155) durch Auswerten der folgenden Formel korrigiert wird:$\text{T = τ x t/Δt,}$ wobei gilt:
T korrigierter Pitabstand,
τ gemessener Pitabstand,
t Zeit, die ein Datenpit (31) benötigt, um an den ersten und zweiten Sensoren (301, 302) vorbeizulaufen, wenn die optische Karte (1) ohne Geschwindigkeitsänderung befördert wird,
und
Δt Durchlaufzeit, d. h. die gemessene Zeitdauer, die für ein Datenpit (31) erforderlich ist, um tatsächlich an den ersten und zweiten Sensoren (301, 302) vorbei zu laufen.

8. Einrichtung nach irgendeinem der Ansprüche 2 bis 7, wobei die ersten und zweiten Sensoren (301, 302) Zeilensensoren umfassen.

## Revendications

1. Appareil de reproduction d'informations à utiliser avec une carte optique (1), qui comprend : une tête optique (11) pour lire, au cours d'une opération de lecture, une information (31) stockée sur la carte optique (1) et pour fournir un signal d'information qui est représentatif de ladite information; des moyens de transfert (12A, 12B, 13, 14A, 14B) pour déplacer la carte optique (1) par rapport à la tête optique (11) pendant cette opération de lecture; des moyens (151, 152, 153, 154) de détection de vitesse pour détecter, pendant ladite opération de lecture, la vitesse à laquelle la carte optique (1) se déplace par rapport à la tête optique (11) et pour fournir un signal de détection qui est représentatif de ladite vitesse; et un moyen de correction (155) couplé de façon à recevoir ledit signal d'information et ledit signal de détection, destiné à utiliser ledit signal de détection pour corriger ledit signal d'information de manière à compenser l'effet sur ce dernier des variations de la vitesse de déplacement de la carte optique (1);
caractérisé en ce que lesdits moyens (151, 152, 153, 154) de détection de vitesse sont couplés pour recevoir le signal d'information non corrigé et sont capables d'en déduire la vitesse de déplacement de ladite carte optique (1).

2. Appareil selon la revendication 1, dans lequel ladite tête optique (11) comprend un photodétecteur (28) sur lequel sont formées des images de pistes de données (3), et de microcuvettes de données (31) formées sur les pistes de données (3), ledit photodétecteur (28) comprenant au moins des premier et deuxième capteurs (301, 302) servant à détecter lesdites images des microcuvettes de données (31), l'écartement de microcuvette (τ) entre des microcuvettes de données (31) disposées les unes à la suite des autres sur la carte optique (1) et le temps de transit (Δt) que met l'une de ces microcuvettes de données (31) à passer sur les premier et deuxième capteurs (301, 302) étant détectés en fonction des sorties des premier et deuxième capteurs (301, 302).

3. Appareil selon la revendication 2, dans lequel lesdits moyens (151-154) de détection de vitesse comprennent un circuit (153) de mesure d'écartement de microcuvettes, auquel est fourni un signal de lecture qui représente une microcuvette de données (31) détectée par ledit premier capteur (301), destiné à être utilisé pour mesurer l'écartement (τ) entre des microcuvettes adjacentes; un circuit (154) de mesure du temps de transit, auquel sont fournis ledit signal de lecture détecté par ledit premier capteur (301) et un signal de lecture détecté par ledit deuxième capteur (302), servant à mesurer le temps de transit (Δt) mis par une microcuvette de données (31) pour passer sur les premier et deuxième capteurs (301, 302); ledit moyen de correction (155) comprenant un circuit de correction d'écartement de microcuvettes servant à corriger une erreur dans l'écartement de microcuvettes (τ) mesuré par ledit circuit (153) de mesure d'écartement de microcuvettes en fonction du temps de transit (Δt) de la microcuvette de données (31) détecté par le circuit (154) de mesure du temps de transit.

4. Appareil selon la revendication 3, dans lequel lesdits moyens (151-154) de détection de vitesse comprennent en outre un premier circuit bivalent (151) servant à convertir le signal de lecture détecté par le premier capteur (301) en des signaux bivalents, un deuxième circuit bivalent (152) servant à convertir le signal de lecture détecté par le deuxième capteur (302) en des signaux bivalents, une mémoire tampon (156) servant à conserver le signal de sortie dudit circuit (155) de correction d'écartement de microcuvettes et à produire un signal impulsionnel qui correspond à une sortie dudit circuit (155) de correction d'écartement de microcuvettes, et un circuit PLL (157) servant à éliminer une composante d'instabilité contenue dans ledit signal de lecture corrigé et à donner un signal de données démodulé.

5. Appareil selon la revendication 2, dans lequel :
- lesdits moyens (151-154) de détection de vitesse comprennent une pluralité de circuits (153) de mesure d'écartement de microcuvettes servant à détecter les écartements de microcuvettes respectifs entre des microcuvettes de données (31) adjacentes formées sur une pluralité de pistes de données (3), chaque circuit (153) de mesure d'écartement de microcuvettes recevant un signal de lecture qui correspond aux microcuvettes de données (31) détectées par le premier capteur (301), et
- un circuit (154) de mesure de temps de transit couplé de manière à recevoir l'un des signaux de lecture correspondant aux microcuvettes de données (31) d'une piste (3) détectées par le premier capteur (301) et chaque signal de lecture correspondant aux microcuvettes de données (31) de chaque piste (3) détectées par le deuxième capteur (302), servant à mesurer un temps de transit (Δt) mis par une microcuvette de données pour passer sur les premier et deuxième capteurs (301, 302) pour chaque piste de données (3),
- lesdits moyens de correction (155) comprenant une pluralité de circuits de correction d'écartement de microcuvettes, servant à corriger une erreur dans l'écartement des microcuvettes (τ) mesuré par chaque circuit (153) de mesure d'écartement de microcuvettes en fonction du temps de transit (Δt) détecté par le circuit (154) de mesure de temps de transit.

6. Appareil selon la revendication 5, dans lequel lesdits moyens (151-154) de détection de vitesse comprennent en outre :
- une pluralité de circuits bivalents (151) servant à convertir les signaux de lecture détectés par les premier et deuxième capteurs (301, 302) en des signaux bivalents,
- une pluralité de mémoires tampons (156) servant à conserver les sorties desdits circuits (155) de correction d'écartement de microcuvettes et à produire des signaux impulsionnels qui correspondent aux sorties desdits circuits (155) de correction d'écartement de microcuvettes,
- un sélecteur (158) servant à choisir l'un des signaux impulsionnels en fonction d'une instruction fournie depuis un moyen de commande (19) de l'appareil et à délivrer le signal impulsionnel ainsi choisi, et
- un circuit PLL (157) servant à éliminer une composante d'instabilité contenue dans lesdits signaux impulsionnels choisis dans ledit sélecteur (158) et à donner un signal de données démodulé.

7. Appareil selon la revendication 3, 4, 5 ou 6, dans lequel l'écartement de microcuvettes (τ) mesuré dans chaque circuit (153) de mesure d'écartement de microcuvettes est corrigé dans chaque circuit (155) de correction d'écartement de microcuvettes par application de la formule suivante :$\text{T = τ x t/Δt}$ dans laquelle :
T représente un écartement de microcuvettes corrigé,
τ représente l'écartement de microcuvettes mesuré,
t représente le temps mis par une microcuvette de données (31) pour passer sur les premier et deuxième capteurs (301, 302) quand la carte optique (1) est déplacée sans variation de sa vitesse, et
Δt représente le temps de transit, c'est-à-dire l'intervalle de temps mesuré, nécessaire pour qu'une microcuvette de données (31) passe réellement sur les premier et deuxième capteurs (301, 302) .

8. Appareil selon l'une quelconque des revendications 2 à 7, dans lequel lesdits premier et deuxième capteurs (301, 302) sont des capteurs linéaires.
